# EUROPÄISCHE PATENTSCHRIFT

(11) **EP 3 712 217 B1**
(45) Veröffentlichungstag und Bekanntmachung des Hinweises auf die Patenterteilung: **05.01.2022**
(21) Anmeldenummer: 20172741.9
(22) Anmeldetag: 06.04.2017
(51) Int. Cl.: C09D 5/00

(54) **WÄSSRIGE BESCHICHTUNGSSTOFFE**
AQUEOUS COATING SUBSTANCES
MATÉRIAU DE REVÊTEMENT AQUEUX

(43) Veröffentlichungstag der Anmeldung: 23.09.2020
(62) Teilanmeldung aus: 17165280.3
(73) Patentinhaber: DAW SE, 64372 Ober-Ramstadt (DE)
(72) Erfinder: GROSSKOPF, Jan, 64367 Mühltal (DE); SEEGER, Alexander, 64739 Höchst (DE); WESTMEIER, Johannes, 64572 Büttelborn (DE); BRENNER, Thomas, 64367 Mühltal (DE)
(74) Vertreter: Metten, Karl-Heinz

(56) Entgegenhaltungen:
- WO-A1-2015/193192
- DE-A1- 19 515 539
- DE-A1-102007 034 865
- DE-A1-102013 020 575
- DE-A1-102014 013 455
- DE-C1- 4 309 625

## Beschreibung

Die vorliegende Erfindung betrifft wässrige Beschichtungsstoffe, insbesondere Dispersionsbeschichtungsstoffe. Ferner betrifft die Erfindung einen Farb- oder Grundierungsanstrich auf einer Substratoberfläche, erhalten oder erhältlich durch ein- oder mehrmaliges Auftragen des erfindungsgemäßen Beschichtungsstoffs auf der Substratoberfläche, sowie die Verwendung des erfindungsgemäßen Beschichtungsstoffs als Farbe oder Grundierung für den Innenraumbereich.

Anstrichfarben unterliegen einer fortwährenden Weiterentwicklung. Dies ist Kundenwünschen ebenso geschuldet wie dem Anspruch, dem Verbraucher möglichst kostengünstig qualitativ hochwertige Produkte zur Verfügung stellen zu können. Für Farbanstriche kann auf unterschiedlichste Beschichtungssysteme zurückgegriffen werden. Exemplarisch seien Silikatfarben, Dispersionssilikatfarben und Kunststoffdispersionsfarben genannt. Für diese Systeme finden sich in der DIN 18363:2016-09 entsprechende Definitionen.

Von Farbanstrichen wird häufig nicht nur verlangt, dass sie ein hohes Deckvermögen besitzen, sondern ebenfalls, dass sie über eine hohe mechanische Beständigkeit, beispielsweise gute Nassabriebbeständigkeit, verfügen. Entsprechend hat es nicht an Versuchen gefehlt, zu entsprechend verbesserten Farbanstrichen zu gelangen.

Beispielsweise hatte sich schon die DE 10 2013 020 575 A1 die Aufgabe gestellt, Dispersionsfarben bereitzustellen, die bei einem reduzierten Gehalt an Titandioxid gleichwohl ein hohes Deckvermögen sowie eine gute Nassabriebbeständigkeit gewährleisten. Dies soll durch ein solches Beschichtungsmittel gelingen, enthaltend bezogen auf die Gesamtmenge des Beschichtungsmittels, 0,5 bis 30 Gew.-% Hohlteilchen, umfassend eine einen Hohlraum bildende äußere Schale und ein von der äußeren Schale zumindest teilweise umschlossenes inneres Material, wobei die äußere Schale einen Brechungsindex von 1,3 bis 2,5 und das innere Material einen Brechungsindex von 1,4 bis 3,2 aufzuweisen haben, und wobei das innere Material das Volumen des Hohlraums teilweise ausfüllt, 0,5 bis 40 Gew.-% mindestens eines filmbildenden Polymers sowie Wasser und/oder Lösemittel.

Hinreichend in Bezug auf Deckvermögen und Nassabrieb sollen gemäß der DE 10 2014 013 455 A1 solche Dispersionsfarben sein, die 2 bis 30% Polymerdispersion gerechnet als Feststoffanteil, 10 bis 60% Pigment und/oder Füllstoff, 0,5 bis 5% Siliconat als Additiv und zu 100% ergänzte Anteile an Wasser enthalten.

Gemäß der WO 2015/193192 A1 sollen solche wässrigen Polymerisatdispersionen eine verbesserte Nassscheuerbeständigkeit aufweisen, die durch radikalische wässrige Emulsionspolymerisation einer Monomermischung erhältlich sind, enthaltend 30 bis 70 Gew.-Teile wenigstens eines Monomers, dessen Homopolymerisat eine Glasübergangstemperatur Tg < 25°C aufweist, 30 bis 70 Gew.-Teile wenigstens eines Monomers, dessen Homopolymerisat eine Glasübergangstemperatur Tg > 25°C aufweist, sowie c) 0,1 bis 5 Gew.-Teile wenigstens einer Verbindung enthaltend stabilisierende Gruppen und 0,05 bis 5 Gew.-Teile wenigstens eines copolymerisierbaren Monomers enthaltend eines oder mehrerer hydrolysierbare SilanMonomere.

Die DE 10 2007 034 865 A1 stellt ab auf eine Beschichtungsstoffzusammensetzung, die im Wesentlichen enthalten soll:
1. 0,1 bis 80 Gew.-% eines vergilbungsbeständigen, niedrigviskosen, ungesättigten, amorphen Polyesters, der weitestgehend frei von Benzol und Formaldehyd ist, bestehend aus
   I. einer Säurekomponente aus
      A) 10 bis 100 mol-% von α,β-ungesattigten Dicarbonsäure,
      B) o bis 90 mol-% von linearen und/oder verzweigten, aliphatischen und/oder cycloaliphatischen und/oder aromatischen di- und/oder polyfunktionellen Carbonsäure, die über keine α,β-ungesättigten Gruppierungen verfügt,
      wobei die Summe aus A) und B) 100 mol-% ergibt,
   II. einer Alkoholkomponente aus
      C) 5 bis 100 mol-% eines Dicidolgemisches,
      D) o bis 95 mol-% von di- und/oder polyfunktionellen Alkoholen, wobei die Summe aus C) und D) 100 mol-% ergibt, und wobei
         - der Gehalt an Benzol und 10 mg/kg und der Gehalt an Formaldehyd unter 10 mg/kg liegt, bezogen auf den Polyester,
         - die Polydispersitat der Molekulargewichtsverteilung des Polyesters zwischen 1,3 und 4,5 liegt, und
         - der Gehalt an Tricyclodecan(mono-/di-)aldehyd in dem Dicidolgemisch C) unter 2 Gew.-% liegt,
         - der Gehalt an Mono(hydroxymethyl)tricyclo[5.2.1.0^{2.6}]decan in dem Dicidolgemisch C) unter 10 Gew.-% liegt,
         - der Gehalt an den Metallen Chrom, Nickel, Kupfer, Cadmium, Blei und Rhodium in dem Dicidolgemisch C) jeweils für sich unter 2 mg/kg liegt, und
2. 99,9 bis 20 Gew.-% an einem weiteren Bindemittel,
3. 0 bis 80 Gew.-% mindestens eines Hilfsstoffes und/oder Zusatzstoffes,
4. 0 bis 70 Gew.-% mindestens eines Farbmittels und/oder Füllstoffes,
   - wobei die Summe der Gewichtsangaben der Komponenten 1. bis 4. 100 Gew.-% beträgt.

Diese Beschichtungsstoffzusammensetzungen sollen neben einer sehr guten Haftung auch unter kritischen Klimabedingungen gleichzeitig eine hohe Korrosionsschutzwirkung, einen hohen Glanz, einen hohen Feststoffgehalt bzw. eine niedrige Viskosität bei gegebenem Feststoffgehalt sowie eine sehr gute Steinschlagbeständigkeit und Beständigkeit gegenüber Salzlösungen aufweisen und weitestgehend frei von Benzol und Formaldehyd sein.

Die DE 195 15 539 A1 befasst sich mit wässrigen Beschichtungszusammensetzungen enthaltend (A) wässrige Bindemittel enthaltend (a) Organopolysiloxanharze, (b) Monoorganosilanolate und/oder deren durch Wasserabspaltung entstehende Kondensationsprodukte, (c) wässrige Lösungen kolloider Kieselsäuren und (d) Wasser, (B) Metallpulver und/oder anorganische Pigmente (C), gegebenenfalls Siliciumdioxide mit einer BET-Oberfläche von mindestens 50 m²/g, die gegebenenfalls hydrophobiert sind, und (D) gegebenenfalls Wasser. Diese wässrigen Beschichtungszusammensetzungen sollen nicht mehr lange Trocknungszeiten mit sich bringen und zudem hinreichende Lösemittel- und Wasserbeständigkeiten aufweisen, insbesondere auch bei höherer Zugabemenge von Monoorganosilanolaten, ohne zugleich eine verstärkte Wasserstoffbildung durch das Ansteigen des pH-Wertes zu zeigen.

Die DE 43 09 625 C1 hat ein Verfahren zur Herstellung eines kunstharzdispersionsvergüteten silikatgebundenen Beschichtungssystems in Form von Anstrichstoffen, Spachtelmassen, Grundierungen, Wandbelägen und Putzen zum Gegenstand, bei dem die Mischung aus Kaliwasserglas und Acrylatmischpolymerisat auf Kunstharzdispersionsbasis vorübergehend unter Rühren auf ca. 50°C erwärmt wird. Auf diese Weise sollen sich lagerstabile, koagulatfreie Formulierungen erhalten lassen, die auch in Gegenwart von Kaliwasserglas alkali-, verseifungs- und wasserglasbeständige Dispersionen liefern.

Es wäre nur wünschenswert, auf solche wässrigen Beschichtungsmassen zurückgreifen zu können, die sich kostengünstig herstellen lassen und die sich gleichzeitig hinsichtlich Farbeindruck und der mechanischer Beständigkeit durch ein nutzerfreundliches Eigenschaftsprofil auszeichnen. Demgemäß lag der vorliegenden Erfindung die Aufgabe zu Grunde, wässrige Beschichtungsmassen zur Verfügung zu stellen, die nicht mehr mit den Nachteilen des Stands der Technik behaftet sind und die insbesondere über ein gutes Deckvermögen und/oder einen guten, dauerhaften Farbeindruck, ermittelt insbesondere anhand der Weiß- und/oder Gelbindex-Werte, und gegebenenfalls zusätzlich auch über eine zufriedenstellende Nassabriebsbeständigkeit verfügen.

Demgemäß wurden wässrige Beschichtungsstoffe, insbesondere Dispersionsbeschichtungsstoffe, gefunden, enthaltend
a) organische Bindemittel in einer Menge im Bereich von 4,0 bis kleiner 30,0 Gew.-% (Feststoffanteil), wobei das organisches Bindemittel a) in dem wässrigen Beschichtungsstoff in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegt und/oder
   wobei das organische Bindemittel a) und Wasserglas und/oder Kieselsol in dem wässrigen Beschichtungsstoff in Form eines hybriden Bindemittels vorliegt,
b) Wasserglas und/oder Kieselsol in einer Menge kleiner 1,5 Gew.-% (Feststoffanteil) und
c) 15 bis 70 Gew.-% an mindestens einem Pigment und/oder mindestens einem Füllstoff,
   wobei die wässrigen Beschichtungsstoffe einen pH-Wert im Bereich von 8,5 bis 12 aufweisen oder auf einen pH-Wert im Bereich von 8,5 bis 12 eingestellt sind.

Beschichtungsstoffe im Sinne der vorliegenden Erfindung sollen Zusammensetzungen gemäß DIN EN ISO 4618:2015-01 umfassen. Hierunter fallen insbesondere Anstrichstoffe wie Dispersionsfarben und Spachtelmassen.

In den erfindungsgemäßen Beschichtungsstoffen liegt in einer zweckmäßigen Ausgestaltung das organische Bindemittel a) in einer Menge im Bereich von 4,0 bis 12,5 Gew.-%, bevorzugt im Bereich von 4,5 bis 10,0 Gew.-% und besonderes bevorzugt im Bereich von 5,0 bis 9,0 Gew.-%. Mit den genannten Bindemittelanteilen lässt sich mit den erfindungsgemäßen Beschichtungsstoffen im Allgemeinen ein für Innen- wie auch Außenanwendung ausreichender geringer Nassabrieb erhalten. Ferner liegt alternativ oder zusätzlich in einer weiteren zweckmäßigen Ausgestaltung das Wasserglas und/oder Kieselsol in einer Menge kleiner 1,45 Gew.-%, bevorzugt im Bereich von 0,1 bis 1,45 Gew.-% und besonders bevorzugt im Bereich von 0,25 bis 1,40 Gew.-%. Für viele Anwendungen hat sich gezeigt, dass sich schon mit einer Menge kleiner 1,5 Gew.-% (Feststoffanteil) an Wasserglas mit den erfindungsgemäßen Beschichtungsmassen ein hinreichendes Deckvermögen erhalten lässt. Wasserglas kann z.B. durch Reaktion von Alkalicarbonat und/oder Alkalihydroxyd mit Quarzsand erhalten werden. Es liegt üblicherweise in Form wässriger Lösungen vor. Diese können über unterschiedliche Konzentrationen verfügen. Technische Bedeutung haben im Allgemeinen Natrium- und Kaliumwasserglas sowie Lithiumwasserglas. Für die erfindungsgemäßen Beschichtungsmassen greift man bevorzugt auf Kaliumwasserglas zurück.

Das organisches Bindemittel a) liegt in den erfindungsgemäßen Beschichtungsstoffen insbesondere in Form einer wässrigen Dispersion auf Basis von Copolymeren auf Basis von Styrol und Acrylaten vor. Als geeignete organische Bindemittel kommen für die erfindungsgemäßen wässrigen Beschichtungsmassen Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und
Vinylestern mindestens einer Koch-Säure, insbesondere der Versatinsäure, oder Vinylaromaten, insbesondere Styrol.

Unter den Begriff der organischen Bindemittel fallen im Sinne der Erfindung auch Dispersionen auf Basis der zuvor genannten Polymere und Copolymere, jedoch enthaltend darin einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt. Ferner umfassen organische Bindemittel insbesondere auch hybride Bindemittel. Unter hybride Bindemittel im Sinne der vorliegenden Erfindung fallen auch Reaktionsprodukte gebildet aus mindestens einem organischen Bindemittel ausgewählt aus der Gruppe der vorangehend genannten organischen Bindemittel, enthaltend in die Polymere und Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt, und Kieselsol und/oder Wasserglas, insbesondere Wasserglas. Ohne an eine Theorie gebunden zu sein, wird vermutet, dass die hydrolysierbare Silangruppe a) und/oder die Hydroxygruppe b) eine Kondensationsreaktion mit den funktionellen Gruppen des Kieselsols und/oder Wasserglases eingehen.

Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktintant, Chromorange, Cersulfid, Eisenoxidgelb, Nickeltitangelb, Chromtitangelb, Spinellphasen, Chromgelb und/oder Bismutvanadat.

Geeignete organische Pigmente können hierbei z.B. ausgewählt werden aus der Gruppe bestehend aus Monoazopigmenten, Diazopigmenten, Diazokondensationspigmenten, Anthrachinonpigmenten, Anthrapyrimidinpigmenten, Chinacridonpigmenten, Diketopyrrolopyrrolpigmenten, Dioxazinpigmenten, Flavanthronpigmenten, Indanthronpigmenten, Isoindolinpigmenten, Isoindolinonpigmenten, Isoviolanthronpigmenten, Metallkomplexpigmenten, Perinonpigmenten, Perylenpigmenten, Phtalocyaninpigmenten, Pyranthronpigmenten, Pyrazolochinazolonpigmenten, Thioindigopigmenten, Triarykarboniumpigmenten und deren beliebigen Mischungen. Exemplarisch seien als geeignete organische Pigmente Bunt- und Schwarzpigmente genannt. Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Besonders geeignete Pigmente umfassen zum Beispiel Titandioxid, Zinksulfid, Zinkoxid, Baryt, Ruß, Eisenoxid, Chromoxid, Kobaltblau, Phtalocyaninpigment, Spinellpigment, Nickeltitanat, Chromtitanat und deren beliebige Mischungen.

Grundsätzlich können geeignete Füllstoffe ausgewählt werden aus der Gruppe bestehend aus Silikaten, Karbonaten, Flußspat, Sulfaten, Oxiden und deren beliebige Mischungen. Exemplarisch seien calcitische Füllstoffe, insbesondere Calciumcarbonate, Dolomite, Calcite und/oder Aragonite, silikatische Füllstoffe, insbesondere Quarzite, Schichtsilikate, Feldspate, Vulkanite und/oder Kieselerden wie Kieselgur und Diatomeenerden, sulfatische Füllstoffen, insbesondere Bariumsulfat, und chemisch modifizierte Füllstoffe genannt.

Das mindestens eine Pigment und/oder der mindestens eine Füllstoff c) liegen in den erfindungsgemäßen Beschichtungsstoffen in einer zweckmäßigen Ausgestaltung in einer Menge im Bereich von 20 bis 70 Gew.-%, vorzugsweise im Bereich von 25 bis 70 Gew.-% und besonders bevorzugt im Bereich von 35 bis 60 Gew.-%, vor.

Die erfindungsgemäßen Beschichtungsstoffe weisen in einer bevorzugten Ausgestaltung einen pH-Wert im Bereich von 9 bis 11,5 auf oder werden auf einen pH-Wert im Bereich von 9 bis 11,5 eingestellt. Die Einstellung des pH-Wertes kann durch das zugesetzte Wasserglas und/oder Kieselsol erfolgen. Gegebenenfalls können auch Alkali- und/oder Erdalkalihydroxide, z.B. KOH, Ammoniak und/oder Aminverbindungen, vorzugsweise in Form wässriger Lösungen, zugegeben werden. Demgemäß können die erfindungsgemäßen Beschichtungsstoffe ferner mindestens ein Alkali- und/oder Erdalkalihydroxid, Ammoniak und/oder eine Aminverbindung (Komponente d)) aufweisen. Geeignete Aminverbindungen umfassen z.B. auch Aminoalkohole. Überraschend wurde gefunden, dass diese Aminoalkohole in den erfindungsgemäßen wässrigen Beschichtungsmassen auch eine stabilisierende Wirkung ausüben können. Sie können in den erfindungsgemäßen Beschichtungsstoffen darüber hinaus beispielsweise auch als Neutralisationsmittel und/oder als Dispergiermittel eingesetzt werden. Exemplarisch seien als bevorzugte Aminoalkohole 2-Amino-2-methyl-1-propanol, 2-Amino-2-ethyl-1,3-propandiol, N,N,N',N'-Tetrakis(2-hydroxypropyl)-ethylendiamin und deren Mischungen sowie Polyhydroxyamine, insbesondere Polyhydroxyamine, bei denen die Polyhydroxy-Einheit auf einer Hexose, vorzugsweise Glukose, basiert, genannt. Besonders geeignete Polyhydroxyamine umfassen Alkylglukamine, insbesondere tertiäre Alkylglukamine wie Dimethylglukamin, Hydroxyethyl- und Hydroxypropyl-N-Methylglukamin sowie deren Mischungen. Selbstverständlich können auch beliebige Mischungen an Polyhydroxyaminen, insbesondere den bevorzugten Polyhydroxyaminen, und 2-Amino-2-methyl-1-propanol, 2-Amino-2-ethyl-1,3-propandiol und/oder N,N,N',N'-Tetrakis(2-hydroxypropyl)-ethylendiamin eingesetzt werden. Unter den Aminoalkoholen wird bevorzugt auf 2-Amino-2-methyl-1-propanol, 2-Arnino-2-ethyl-1,3-propandiol und/oder N,N,N',N'-Tetrakis(2-hydroxypropyl)-ethylendiamin zurückgegriffen.

Die erfindungsgemäßen Beschichtungsstoffe können ferner ausgestattet sein mit e) mindestens einem Rheologieadditiv, insbesondere Verdickern, f) mindestens einem Alkylalkoxysilan, Alkvlalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon sowie gegebenenfalls g) mindestens einem Chelatbildner (auch Komplexbildner genannt) und/oder g) gegebenenfalls mit mindestens einem Additiv. Als genete Komplexbildner bzw. Chelatbildner seien genannt Ethylendiamintetraessigsäure (EDTA), Diethylentriaminpentaessigsäure (DTPA), Nitrilotriessigsäure Hydroxyethylethylendiamintriessigsäure, Aminopolycarbosäuren, insbesondere enthaltend eine oder mehrere Aminogruppen und zwei oder mehr Carbonsäuregruppen, und Polyphosphonsäuren, z.B. Phosphonopolycarbonsäuren wie 2-Phosphonobutan-1,2,4-tricarbonsäure, sowie deren beliebige Mischungen.

Als Additive können grundsätzlich herkömmliche Additive, wie sie für wässrige Beschichtungsmasse zum Einsatz kommen, eingesetzt werden. Exemplarisch können geeignete Additive ausgewählt sein aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen. Die erfindungsgemäßen wässrigen Beschichtungsstoffe enthalten als Additive vorzugsweise mindestens einen Verdicker und/oder einen Entschäumer. Besonders bevorzugt liegen in den erfindungsgemäßen wässrigen Beschichtungsstoffen sowohl Verdicker wie auch Entschäumer vor.

Die genannten Additive liegen in einer bevorzugten Ausgestaltung in den erfindungsgemäßen wässrigen Beschichtungsstoffen in einer Menge im Bereich von 0,001 bis 5 Gew.-%, vorzugsweise im Bereich von 0,01 bis 4 Gew.-% und besonders bevorzugt im Bereich von 0,1 bis 3,5 Gew.-% vor, jeweils bezogen auf den Feststoffanteil bzw., sofern diese Additive bei Raumtemperatur nicht als Feststoff vorliegen sollten, auf den nicht-wässrigen Wirkstoffanteil dieser Additivkomponenten.

Geeignete Verdicker können ausgewählt werden aus der Gruppe bestehend aus Polyacrylat-Verdickern, Polyurethan-Verdickern, Polyharnstoff-Verdickern) Cellulose-Verdickern, hierbei insbesondere Hydroxyethylcellulose und/oder Methylcellulose, Polyvinylalkohol-Verdickern, Polyetherpolyol-Verdickern, Polysaccharid-Verdickern, hierbei insbesondere Xanthan und/oder Agar Agar, und beliebigen Mischungen hiervon.

Geeignete Verdickersysteme können auch auf der kombinierten Verwendung von Schichtsilikaten, insbesondere organisch modifizierten Schichtsilikaten, und Polysacharidverdickern, hierbei insbesondere Xanthan, basieren.

In einer weiteren bevorzugten Ausführungsform können die erfindungsgemäßen Beschichtungsstoffe i) 4 bis 12,5 Gew.-%, insbesondere 4 bis 7 Gew.-%, Polymerdispersion (Komponente a)), ii) o bis 30 Gew.-%, insbesondere 2,0 bis 15 Gew.-%, Pigmente (Komponente c)), iii) 15 -bis 70 Gew.-%, insbesondere 20 bis 65 Gew.-%, Füllstoffe (Komponente c)) und/oder, vorzugsweise und, iv) 0,1 bis 1,5 Gew.-%, insbesondere 0,2 bis 1,25 Gew.-%, Wasserglas (Komponente b)) sowie v) zu 100 Gew.-% ergänzte Anteile an Wasser enthalten.

Die erfindungsgemäßen wässrigen Beschichtungsstoffe zeichnen sich insbesondere auch dadurch aus, dass sie im Wesentlichen frei von Konservierungsmitteln sein können. Hierbei ist von besonderem Vorteil, dass diese Beschichtungsstoffe auch ohne jegliche organische biozide Konservierungsmittel über längeren Zeitraum keinen Pilz- und/oder bakteriellen Befall zeigen. Es ist mit den erfindungsgemäßen Beschichtungsstoffen demgemäß nicht mehr zwingend erforderlich, auf Topf- und/oder Filmkonservierungsmittel zurückgreifen zu müssen. Mit den erfindungsgemäßen wässrigen Beschichtungsstoffen geht der weitere Vorteil einher, dass durch, insbesondere festkörpergleiche, Substitution von Pigmenten, insbesondere Weißpigmenten wie Titandioxid, gegen Wasserglas und/oder Kieselsol, insbesondere Wasserglas, in vielen Fällen das Deckvermögen, gemessen nach DIN EN ISO 6504-3 in Verbindung mit DIN EN 13300 (November 2002), nicht beeinträchtigt wird.

Die erfindungsgemäßen Beschichtungsmasse eignen sich zum Beispiel als Grundierung sowie als Fassaden- oder Innenraumfarbe.

Die der Erfindung zu Grunde liegende Aufgabe wird des Weiteren gelöst durch einen Farb- oder Grundierungsanstrich auf einer Substratoberfläche, erhalten oder erhältlich durch ein- oder mehrmaliges Auftragen des erfindungsgemäßen Beschichtungsstoffs auf der Substratoberfläche. Demgemäß sind die erfindungsgemäßen Beschichtungsstoffe, insbesondere in Form von Dispersionsbeschichtungsstoffen, als Farbe oder Grundierung für den Innenraumbereich geeignet.

Mit den erfindungsgemäßen wässrigen Beschichtungsstoffen gelingt ein relativ kostengünstiger Zugang zu Grundierungs- bzw. Farbanstrichen, die sich durch ein hohes Deckvermögen und eine gute Nassabriebbeständigkeit auszeichnen. Die mit den erfindungsgemäßen Beschichtungsstoffen erhaltenen Beschichtungen sind zudem regelmäßig mit einem verbesserten Weißindex und auch einem geringen Gelbindex ausgestattet.

Die beiden Messgrößen Weißindex und Gelbindex wurden gemäß ASTM E 313:2015 bestimmt. Für die Ermittlung des Nassabriebs wurde auf die Norm EN 13300 (November 2002) zurückgegriffen. Die Ermittlung des Deckvermögens erfolgte nach DIN EN ISO 6504-3:2007-05.

Die Erfindung wird durch die nachfolgenden, beispielhaften Zusammensetzungen beschrieben, die jedoch keine Limitierung der Erfindung darstellen. Der Fachmann auf dem Gebiet kann, basierend auf der vorliegenden Beschreibung sowie seinem allgemeinen Fachwissen, weitere Ausführungsformen der Erfindung ausarbeiten, ohne erfinderisch tätig werden zu müssen Alle Angaben erfolgen in Gewichtsprozent. Sofern wasser- und/oder lösemittelhaltige Zubereitungen zum Einsatz kamen, bezieht sich die Angabe auf den Festkörperanteil dieser Zubereitung.

In den Ausführungsbeispielen 1.2, 1.3 und 1.4, sowie 2.2 und 2.3, wurde, ausgehend von den Vergleichsbeispielen 1.1 und 2.1, exemplarisch organisches Bindemittel im Wesentlichen festkörpergleich schrittweise durch anorganisches Bindemittel ersetzt.

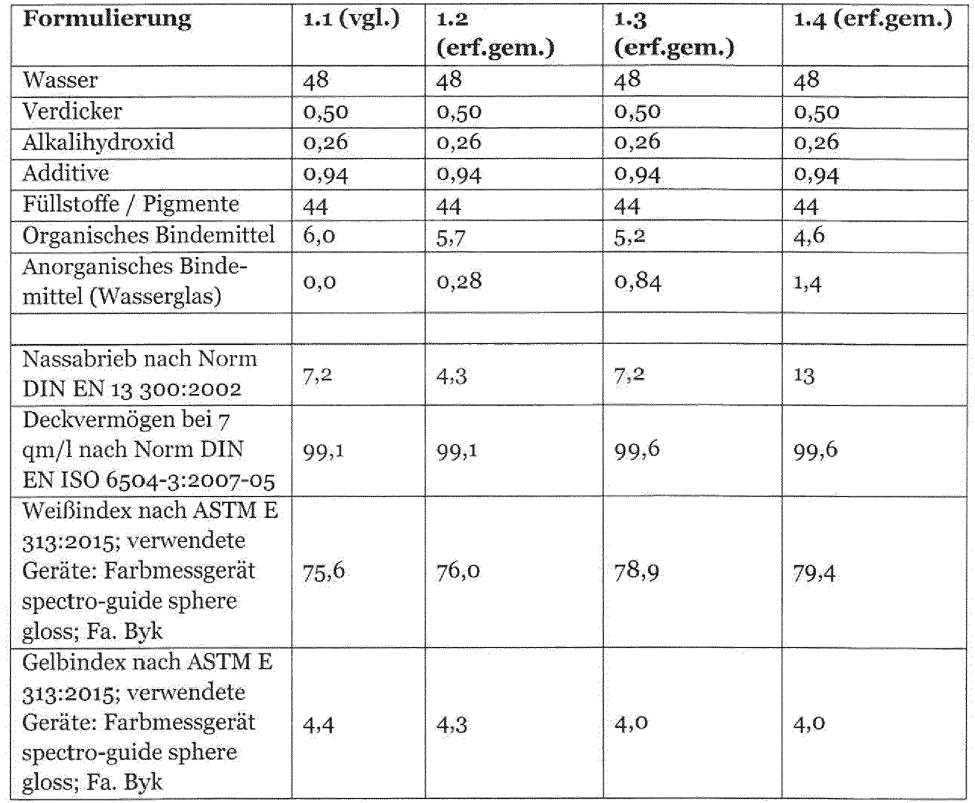

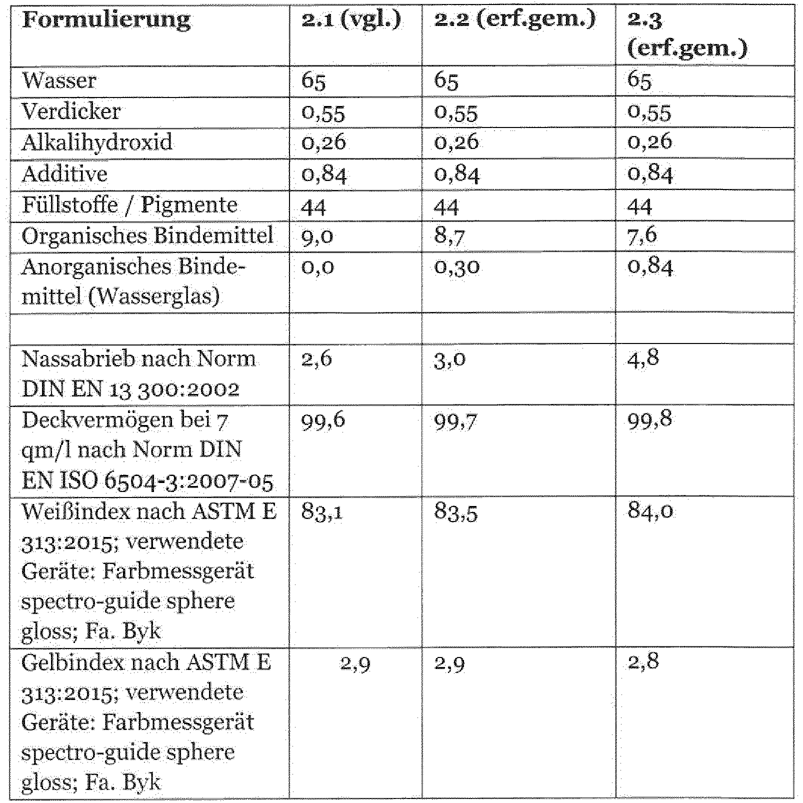

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Beschichtungsstoffe, enthaltend
a) organische Bindemittel
in einer Menge im Bereich von 4,0 bis kleiner oder gleich 30 Gew.-% (Feststoffanteil),
wobei das organisches Bindemittel a) in dem wässrigen Beschichtungsstoff in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegt und/oder
wobei das organische Bindemittel a) und Wasserglas und/oder Kieselsol in dem wässrigen Beschichtungsstoff in Form eines hybriden Bindemittels vorliegt,
b) Wasserglas und/oder Kieselsol
in einer Menge kleiner 1,5 Gew.-% (Feststoffanteil) und
c) 15 bis 70 Gew.-% an mindestens einem Pigment und/oder mindestens einem Füllstoff,
wobei die wässrigen Beschichtungsstoffe einen pH-Wert im Bereich von 8,5 bis 12 aufweisen oder auf einen pH-Wert im Bereich von 8,5 bis 12 eingestellt sind.

2. Beschichtungsstoffe nach Anspruch 1, enthaltend
das organische Bindemittel a) in einer Menge im Bereich von 4,0 bis 12,5 Gew.-%, bevorzugt im Bereich von 4,5 bis 10,0 Gew.-% und besonderes bevorzugt im Bereich von 5,0 bis 9,0 Gew.-%, und/oder
das Wasserglas und/oder Kieselsol in einer Menge kleiner 1,45 Gew.-%, bevorzugt im Bereich von 0,1 bis 1,45 Gew.-% und besonders bevorzugt im Bereich von 0,25 bis 1,40 Gew.-%.

3. Beschichtungsstoffe nach Anspruch 1 oder 2, **dadurch gekennzeichnet, dass** das Copolymere auf Basis von Vinylaromaten und Acrylaten ein Copolymer auf Basis von Styrol und Acrylaten darstellt.

4. Beschichtungsstoffe nach einem der vorangehenden Ansprüche, enthaltend das mindestens eine Pigment und/oder den mindestens einen Füllstoff c) in einer Menge im Bereich von 20 bis 70 Gew.-%, vorzugsweise im Bereich von 25 bis 70 Gew.-% und besonders bevorzugt im Bereich von 35 bis 60 Gew.-%.

5. Beschichtungsstoffe nach einem der vorangehenden Ansprüche, **dadurch gekennzeichnet, dass**
diese einen pH-Wert im Bereich von 9 bis 11,5 aufweisen oder auf einen pH-Wert im Bereich von 9 bis 11,5 eingestellt sind.

6. Beschichtungsstoffe nach einem der vorangehenden Ansprüche, ferner enthaltend
d) mindestens ein pH-Einstellmittel, insbesondere ausgewählt aus der Gruppe bestehend aus Alkalihydroxiden, Erdalkalihydroxiden, Ammoniak, Aminverbindungen und beliebigen Mischungen hiervon, insbesondere mindestens einen Aminoalkohol,
e) mindestens ein Rheologieadditiv, insbesondere Verdicker,
f) mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon und
g) gegebenenfalls mindestens einen Chelatbildner und/oder
h) gegebenenfalls mindestens ein Additiv.

7. Beschichtungsstoffe nach Anspruch 6, **dadurch gekennzeichnet, dass** das mindestens eine Additiv h) ausgewählt ist aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen.

8. Beschichtungsstoffe nach Anspruch 6 oder 7, **dadurch gekennzeichnet, dass** der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Schichtsilikat-Verdicker, Polysaccharid-Verdickern, insbesondere Xanthan, und beliebigen Mischungen hiervon.

9. Beschichtungsstoffe nach einem der vorangehenden Ansprüche, **dadurch gekennzeichnet, dass**
diese im Wesentlichen frei von Konservierungsmitteln, vorzugsweise frei von organischen bioziden Konservierungsmitteln, besonders bevorzugt frei von Topf- und/oder Filmkonservierungsmitteln sind.

10. Beschichtungsstoffe nach einem der vorangehenden Ansprüche, **dadurch gekennzeichnet, dass**
die Pigmente ausgewählt sind aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat und beliebigen Mischungen hiervon.

11. Beschichtungsstoffe nach einem der vorangehenden Ansprüche, **dadurch gekennzeichnet, dass**
die Füllstoffe ausgewählt sind aus der Gruppe bestehend aus Silikaten, Karbonaten, Flußspat, Sulfaten und Oxiden.

12. Beschichtungsstoffe nach einem der vorangehenden Ansprüche, **dadurch gekennzeichnet, dass**
das Wasserglas ausgewählt ist aus der Gruppe bestehend aus Natrium-, Kalium-, Lithiumwasserglas und beliebigen Mischungen hiervon.

13. Beschichtungsstoffe nach einem der vorangehenden Ansprüche, enthaltend
i) 4 bis 12,5 Gew.-%, insbesondere 4 bis 7 Gew.-%, Polymerdispersion,
ii) 0 bis 30 Gew.-%, insbesondere 2,0 bis 15 Gew.-%, Pigmente,
iii) 15 -bis 70 Gew.-%, insbesondere 20 bis 65 Gew.-%, Füllstoffe,
iv) 0,1 bis 1,5 Gew.-%, insbesondere 0,2 bis 1,25 Gew.-%, Wasserglas und
v) zu 100 Gew.-% ergänzte Anteile an Wasser enthält.

14. Beschichtungsstoffe nach einem der vorangehenden Ansprüche, **dadurch gekennzeichnet, dass**
das pH-Einstellmittel einen pKs-Wert größer oder gleich 9,9, insbesondere größer oder gleich 12,0 aufweist.

15. Beschichtungsstoffe nach einem der vorangehenden Ansprüche, **dadurch gekennzeichnet, dass**
diese eine Grundierung oder eine Fassanden- oder Innenraumfarbe darstellt.

16. Farb- oder Grundierungsanstrich auf einer Substratoberfläche, erhalten oder erhältlich durch ein- oder mehrmaliges Auftragen der Beschichtungsstoffe nach einem der vorangehenden Ansprüche auf der Substratoberfläche.

17. Verwendung der Beschichtungsstoffe, insbesondere der Dispersionsbeschichtungsstoffe, nach einem der Ansprüche 1 bis 15 als Farbe oder Grundierung für den Innenraumbereich.

## Claims

1. Aqueous coating materials, containing
a) organic binding agents
in an amount in the range of 4.0 to less than or equal to 30 wt. % (solids content),
wherein the organic binding agent a) is present in the aqueous coating material in the form of an aqueous dispersion on the basis of vinyl acetate/ethylene copolymers, copolymers on the basis of aromatic vinyl compounds and acrylates and/or copolymers on the basis of pure acrylates, and/or
wherein the organic binding agent a) and water glass and/or silica sol are present in the aqueous coating material in the form of a hybrid binding agent,
b) water glass and/or silica sol
in an amount of less than 1.5 wt. % (solids content), and
c) 15 to 70 wt. % of at least one pigment and/or at least one filler material,
wherein the aqueous coating materials have a pH in the range of 8.5 to 12 or are adjusted to a pH in the range of 8.5 to 12.

2. The coating materials according to Claim 1, containing
the organic binding agent a) in an amount in the range of 4.0 to 12.5 wt. %, preferably in the range of 4.5 to 10.0 wt. % and particularly preferably in the range of 5.0 to 9.0 wt. %, and/or
the water glass and/or silica sol in an amount of less than 1.45 wt.%, preferably in the range of 0.1 to 1.45 wt. % and particularly preferably in the range of 0.25 to 1.40 wt. %.

3. The coating materials according to Claim 1 or 2, **characterized in that** the copolymer on the basis of aromatic vinyl compounds and acrylates represents a copolymer on the basis of styrene and acrylates.

4. The coating materials according to any one of the preceding claims, containing the at least one pigment and/or the at least one filler material c) in an amount in the range of 20 to 70 wt. %, preferably in the range of 25 to 70 wt. % and particularly preferably in the range of 35 to 60 wt. %.

5. The coating materials according to any one of the preceding claims, **characterized in that**
they have a pH in the range of 9 to 11.5 or are adjusted to a pH in the range of 9 to 11.5.

6. The coating materials according to any one of the preceding claims, further containing
d) at least one pH adjustment agent, in particular selected from the group consisting of alkali hydroxides, alkaline earth hydroxides, ammonia, amine compounds, and any mixtures thereof, in particular at least one amino alcohol,
e) at least one rheology additive, in particular thickeners,
f) at least one alkylalkoxysilane, alkylalkoxysiloxane, water-soluble alkylsiliconate, in particular potassium methylsiliconate, monoalkylsilanetriol, dialkylsilanediol, trialkylsilanol, alkaline salt of monoalkylsilanetriol, in particular potassium methylsilanetriolate and/or potassium methylsilanetriolate, dialkylsilanediol or trialkylsilanol, or any mixtures thereof, and
g) optionally at least one chelating agent, and/or
h) optionally at least one additive.

7. The coating materials according to Claim 6, **characterized in that** the at least one additive h) is selected from the group consisting of at least one wetting and/or dispersing agent, defoaming agents, stabilizing agents, flame retardants, hydrophobing agents, matting agents, in particular precipitated silica, phyllosilicates, organically modified phyllosilicates, surface additives, in particular silicone surface additives, for example polyether-modified polymethylalkylsiloxane and/or silicone polyether copolymers, buffer substances, UV absorbers, radical scavengers, and mixtures of these compounds.

8. The coating materials according to Claim 6 or 7, **characterized in that** the thickener is selected from the group consisting of polyacrylate thickeners, polyurethane thickeners, polyurea thickeners, cellulose thickeners, in particular hydroxyethyl cellulose and/or methyl cellulose, polyvinyl alcohol thickeners, polyether polyol thickeners, phyllosilicate thickeners, polysaccharide thickeners, in particular xanthane, and any mixtures thereof.

9. The coating materials according to any one of the preceding claims, **characterized in that**
they are substantially free of preservatives, preferably free of organic biocidic preservatives, particularly preferably free of in-can and/or film preservatives.

10. The coating materials according to any one of the preceding claims, **characterized in that**
the pigments are selected from the group consisting of titanium oxide, zinc sulfide, zinc oxide, barite, carbon black, iron oxide, chromium oxide, cobalt blue, phtalocyanine pigments, spinel pigments, nickel and chromium titanate, and any mixtures thereof.

11. The coating materials according to any one of the preceding claims, **characterized in that**
the filler materials are selected from the group consisting of silicates, carbonates, fluorite, sulfates, and oxides.

12. The coating materials according to any one of the preceding claims, **characterized in that**
the water glass is selected from the group consisting of sodium water glass, potassium water glass, lithium water glass, and any mixtures thereof.

13. The coating materials according to any one of the preceding claims, containing
i) 4 to 12.5 wt. %, in particular 4 to 7 wt. %, polymer dispersion,
ii) 0 to 30 wt. %, in particular 2.0 to 15 wt. %, pigments,
iii) 15 to 70 wt. %, in particular 20 to 65 wt. %, filler materials,
iv) 0.1 to 1.5 wt. %, in particular 0.2 to 1.25 wt. %, water glass, and
v) additional amounts of water up to 100 wt. %.

14. The coating materials according to any one of the preceding claims, **characterized in that**
the pH adjustment agent has a pKa value of more than or equal to 9.9, in particular more than or equal to 12.0.

15. The coating materials according to any one of the preceding claims, **characterized in that**
they are a primer or a facade or interior paint.

16. A coat of paint or primer on a substrate surface, obtained or obtainable by a single or multiple application(s) of the coating materials according to any one of the preceding claims onto the substrate surface.

17. Use of the coating materials, in particular of the dispersion coating materials, according to any one of Claims 1 to 15 as a paint or primer for interior spaces.

## Revendications

1. Matériaux de revêtement aqueux, contenant
a) des liants organiques
en une quantité dans la plage de 4,0 à une valeur inférieure ou égale à 30 % massique (teneur en matières solides),
le liant organique a) étant présent dans le matériau de revêtement aqueux sous la forme d'une dispersion aqueuse à base de copolymères d'acétate de vinyle/éthylène, de copolymères à base de composés vinylaromatiques et d'acrylates et/ou de copolymères à base d'acrylates purs et/ou
le liant organique a) et du verre soluble et/ou du gel de silice étant présents dans le matériau de revêtement aqueux sous la forme d'un liant hybride,
b) du verre soluble et/ou du gel de silice
en une quantité inférieure à 1,5 % massique (teneur en matières solides) et
c) de 15 à 70 % massique d'au moins un pigment et/ou d'au moins une charge,
les matériaux de revêtement aqueux présentant une valeur de pH dans la plage de 8,5 à 12 ou étant régulés sur une valeur de pH dans la plage de 8,5 à 12.

2. Matériaux de revêtement selon la revendication 1, contenant
le liant organique a) en une quantité dans la plage de 4,0 à 12,5 % massique, de préférence dans la plage de 4,5 à 10,0 % massique et en particulier de préférence dans la plage de 5,0 à 9,0 % massique et/ou
le verre soluble et/ou le gel de silice en une quantité inférieure à 1,45 % massique, de préférence dans la plage de 0,1 à 1,45 % massique et en particulier de préférence dans la plage de 0,25 à 1,40 % massique.

3. Matériaux de revêtement selon la revendication 1 ou 2, **caractérisés en ce que** le copolymère sur la base de composés vinylaromatiques et d'acrylates représente un copolymère sur la base de styrène et d'acrylates.

4. Matériaux de revêtement selon l'une des revendications précédentes, contenant l'au moins un pigment et/ou l'au moins une charge c) en une quantité dans la plage de 20 à 70 % massique, de préférence dans la plage de 25 à 70 % massique et en particulier de préférence dans la plage de 35 à 60 % massique.

5. Matériaux de revêtement selon l'une des revendications précédentes, **caractérisés en ce que**
lesdits matériaux présentent une valeur de pH dans la plage de 9 à 11,5 ou sont régulés sur une valeur de pH dans la plage de 9 à 11,5.

6. Matériaux de revêtement selon l'une des revendications précédentes, contenant en outre
d) au moins un agent régulateur de pH, en particulier sélectionné parmi le groupe se composant de : hydroxydes alcalins, hydroxydes de métaux alcalins, ammoniac, composés aminés et mélanges quelconques de ceux-ci, en particulier au moins un aminoalcool,
e) au moins un additif rhéologique, en particulier un épaississant,
f) au moins un alkylalkoxysilane, alkylalkoxysiloxane, alkylsiliconate soluble dans l'eau, en particulier méthylsiliconate de potassium, monoalkylsilanetriol, dialkylsilanediol, trialkylsilanol, sel alcalin de monoalkylsilanetriol, en particulier méthylsilanetriolate de potassium et/ou éthylsilanetriolate de potassium, dialkylsilanediol ou trialkylsilanol ou des mélanges quelconques de ceux-ci, et
g) le cas échéant, au moins un agent chélatant et/ou
h) le cas échéant, au moins un additif.

7. Matériaux de revêtement selon la revendication 6, **caractérisés en ce que** l'au moins un additif h) est sélectionné parmi le groupe se composant de : au moins un agent mouillant et/ou un agent dispersant ; des antimoussants, stabilisants, agents ignifuges, agents rendant hydrophobe, agents matants, en particulier acide silicique de précipitation, phyllosilicates, phyllosilicates modifiés organiquement, additifs de surface, en particulier additifs de surface de silicone, par exemple polyméthylalkylsiloxane à modification polyéther et/ou copolyméres de polyéther de silicone, substances tampons, absorbeurs UV, fixateurs de radicaux et mélanges de ces composés.

8. Matériaux de revêtement selon la revendication 6 ou 7, **caractérisés en ce que** l'épaississant est sélectionné parmi le groupe se composant de : épaississants polyacrylates, épaississants polyuréthanes, épaississants polyurées, épaississants de cellulose, en particulier hydroxyéthylcellulose et/ou méthylcellulose, épaississants polyvinylalcools, épaississants polyétherpolyols, épaississants phyllosilicates, épaississants polysaccharides, en particulier xanthane, et mélanges quelconques de ceux-ci.

9. Matériaux de revêtement selon l'une des revendications précédentes, **caractérisés en ce que**
lesdits matériaux sont essentiellement exempt de agents de conservation, de préférence exempt de agents de conservation biocides organiques, en particulier de préférence exempt de agents de conservation en pot ou contre les pellicules.

10. Matériaux de revêtement selon l'une des revendications précédentes, **caractérisés en ce que**
les pigments sont sélectionnés parmi le groupe se composant de : dioxyde de titane, sulfure de zinc, oxyde de zinc, barytine, noir de carbone, oxyde de fer, oxyde de chrome, bleu de cobalt, pigments de phtalocyanine, titanate de nickel et de chrome et mélanges quelconques de ceux-ci.

11. Matériaux de revêtement selon l'une des revendications précédentes, **caractérisés en ce que**
les charges sont sélectionnées parmi le groupe se composant de : silicates, carbonates, spath fluor, sulfates et oxydes.

12. Matériaux de revêtement selon l'une des revendications précédentes, **caractérisés en ce que**
le verre soluble est sélectionné parmi le groupe se composant de : verre soluble de sodium, verre soluble de potassium, verre soluble de lithium et de mélanges de ceux-ci.

13. Matériaux de revêtement selon l'une des revendications précédentes, contenant
i) de 4 à 12,5 % massique, en particulier de 4 à 7 % massique, de dispersion polymère,
ii) de 0 à 30 % massique, en particulier de 2,0 à 15 % massique, de pigments,
iii) de 15 à 70 % massique, en particulier de 20 à 65 % massique, de charges,
iv) de 0,1 à 1,5 % massique, en particulier de 0,2 à 1,25 % massique, de verre soluble et
v) de l'eau, pour compléter à hauteur de 100 % massique.

14. Matériaux de revêtement selon l'une des revendications précédentes, **caractérisés en ce que**
l'agent régulateur de pH présente une valeur de pKa supérieure ou égale à 9,9, en particulier supérieure ou égale à 12,0.

15. Matériaux de revêtement selon l'une des revendications précédentes, **caractérisés en ce que**
lesdits matériaux représentent un apprêt ou une peinture pour façade ou pour intérieur.

16. Couche de peinture ou d'apprêt sur une surface de substrat, obtenue ou pouvant être obtenue par une ou plusieurs application(s) des matériaux de revêtement selon l'une des revendications précédentes sur la surface de substrat.

17. Utilisation des matériaux de revêtement, en particulier des matériaux de revêtement en dispersion, selon l'une des revendications 1 à 15 comme peinture ou apprêt pour l'intérieur.
